# EUROPEAN PATENT APPLICATION

(11) **EP 4 795 986 A1**
(43) Date of publication of application: **26.08.2026**
(21) Application number: 24878767.3
(22) Date of filing: 14.09.2024
(51) Int. Cl.: A47J 37/06

(54) **AIR FRYER**

(30) Priority: 16.10.2023 CN 202322771681 U
(71) Applicant: Shenzhen Chenbei Technology Co., Ltd., Shenzhen, Guangdong 518052 (CN)
(72) Inventor: LIN, Min, Shenzhen, Guangdong 518052 (CN); GU, Weihao, Shenzhen, Guangdong 518052 (CN); HUANG, Zhipeng, Shenzhen, Guangdong 518052 (CN)
(74) Representative: Bird & Bird LLP - Hamburg
(86) International application number: PCT/CN2024/119145
(87) International publication number: WO 2025/082118

(57) **Abstract**

An air fryer (100) comprises a cover body (110) and a frying vat (120), the cover body (110) has a reflective cover (111) for accommodating a heating device, the frying vat (120) has a cooking chamber (121) for placing food, the cover body (110) is configured to cover the frying vat (120), and the heating device comprises a heating element (113) and a fan (114) arranged above the heating element (113). The heating device also includes a heat conductive baffle (130) arranged below the fan (114). The heat conductive baffle (130) and/or the reflective cover (111) are provided with circulation channels (131,132) which connect the reflective cover (111) and the cooking chamber (121). At least a part of the airflow generated when the fan (114) is in operation enters and exits the circulation channels (131,132), thereby generating air convection between the reflective cover (111) and the cooking chamber (121). The air fryer (100) can reduce the grease that enters into the cover body (110).

## Description

### Cross-Reference To Related Application

The present application is based on and claims priority to Chinese Patent Application No. 202322771681.9, filed on October 16, 2023, the entire contents of which are hereby incorporated herein by reference.

### Technical field

The present invention relates to the technical field of cooking appliances, in particular to an air fryer.

### Background

In the existing air fryer, a heating element and a fan of the cover body and a frying vat for placing food are located in one space. The fan is used as a power source to generate convection of air in the space, and the heat generated by the heating element heats the food in the frying vat through two heat conduction methods: air convection and direct radiation.

However, when the air circulates rapidly in the frying vat chamber, the moisture and grease in the fryer will be spread throughout the space along with the circulation of hot air. Therefore, the cover body containing components such as heating elements and fans is easily contaminated by grease. Since the cover body is usually compact and the heating tube is mostly annular and disk-shaped with a complex structure, it is difficult for users to clean it. Long-term use will cause the entire cover body to be covered with oil stains, which is not good for health and sensory experience.

### Summary of the invention

Therefore, the task of the invention is to reduce the pollution of grease to the cover body.

In order to achieve the above task, the invention provides an air fryer, comprising a cover body and a frying vat, the cover body has a reflective cover for accommodating a heating device, the frying vat has a cooking chamber for placing food, the cover body is constructed to cover the frying vat, and the heating device comprises a heating element and a fan arranged above the heating element. According to the invention, the heating device also includes a heat conductive baffle arranged below the fan. The heat conductive baffle and/or the reflective cover are provided with circulation channels. The circulation channels connect the reflective cover and the cooking chamber. At least a part of the airflow generated when the fan is in operation enters and exits the circulation channels, thereby forming air convection between the reflective cover and the cooking chamber.

In the air fryer proposed by the invention, by providing a heat conductive baffle, the entry of grease into the cover body is reduced, at least the pollution of the reflective cover and the fan by the grease is reduced, so that the overall structure of the cover body is simple and convenient for users to clean after use. Furthermore, since the baffle is heat conductive, the addition of the baffle does not affect the heating of the food in the cooking chamber by heat radiation from the heating element.

In some embodiments, the heat conductive baffle may be disposed below the heating element. This can reduce the contamination of the heating element by grease.

In some embodiments, the heat conductive baffle and the heating element may be constructed as an integrated heating baffle, that is, the heating element is integrated into the baffle or the baffle has a heating function. By using an integrated heating baffle to replace the traditional heating tube, the space occupied by the original complex heating element is released, making the entire cover space more compact, improving the efficiency of radiant heat conduction, and benefiting air circulation. The released space can be used to place the first flow guiding structure, thereby further improving the efficiency of air convection without increasing the volume of the cover body.

In some embodiments, the heat-generating baffle can be made based on one of thick film heating technology, heat-generating thin film technology, and graphene technology.

In some embodiments, a first flow guiding structure may be provided, the first flow guiding structure is configured to guide the airflow passing through one of the circulation channels into the cooking chamber along a predetermined direction. By providing the first flow guiding structure, the influence of the baffle on the air convection in the frying vat is reduced, so that the air circulation in the frying vat is smoother, and the temperature field and air volume distribution in the frying vat are more uniform, which is conducive to the cooking of food.

In some embodiments, the first flow guiding structure may have an inclined flow guiding plate configured to guide the airflow passing through one of the circulation channels toward the middle portion or peripheral portion of the cooking chamber.

In some embodiments, a first circulation channel may be provided in the middle of the heat-conducting baffle, and a second circulation channel may be provided between the heat conductive baffle and the reflective cover, so that at least a part of the airflow generated when the fan is in operation flows from the reflective cover into the cooking chamber through the second circulation channel and flows back from the cooking chamber to the reflective cover through the first circulation channel, thereby forming the air convection.

In some embodiments, a first flow guiding structure may be provided, wherein the first flow guiding structure is configured to guide the airflow passing through the second circulation channel into the cooking chamber along a predetermined direction.

In some embodiments, the heat conductive baffle can be fixed on the reflection cover.

In some embodiments, the heat conductive baffle is configured to be capable of moving relative to the fan. This allows the position of the heat conductive baffle relative to the fan to be adjusted according to the specific design of the air fryer to achieve optimal air circulation.

In some embodiments, the heat conductive baffle may be disposed on the reflective cover in a manner that it is movable relative to the fan.

In some embodiments, the first flow guiding structure may be fixed to the reflective cover, and/or the first flow guiding structure may be configured to be movable relative to the fan.

In some embodiments, the first flow guiding structure may be disposed on the heat conductive baffle.

In some embodiments, the first flow guiding structure is fixed on the reflective cover, and a second flow guiding structure independent of the first flow guiding structure is arranged on the heat conductive baffle, and the second flow guiding structure is configured to cooperate with the first flow guiding structure to guide the airflow passing through one of the circulation channels into the cooking chamber along the predetermined direction.

### Description of drawings

FIG. 1 shows a first embodiment of an air fryer according to the present invention.
FIG. 2 shows a second embodiment of an air fryer according to the present invention.
FIG. 3 shows an embodiment of a heat conductive baffle of an air fryer according to the present invention.
FIG. 4 shows a third embodiment of an air fryer according to the present invention.
FIG. 5 shows a fourth embodiment of an air fryer according to the present invention.
FIG. 6 shows a fifth embodiment of an air fryer according to the present invention.
FIG. 7 shows an embodiment of an integrated heating baffle of the air fryer according to the present invention.
FIG. 8 shows a sixth embodiment of an air fryer according to the present invention.
FIG. 9 shows a seventh embodiment of an air fryer according to the present invention.
FIG. 10 shows an eighth embodiment of an air fryer according to the present invention.
FIG. 11 shows a ninth embodiment of an air fryer according to the present invention.

### Detailed description

The embodiments of the present invention will be described clearly and completely below in conjunction with the accompanying drawings. It is clear that the described embodiments are only some of the embodiments of the present invention, rather than all embodiments. Based on the embodiments of the invention, all other embodiments obtained by ordinary technicians in this field without making any creative work shall fall within the scope of protection of the invention.

Throughout the description, unless otherwise specifically stated, the terms used herein should be understood as having the meanings commonly used in the art. Therefore, unless otherwise defined, all technical and scientific terms used herein have the same meaning as commonly understood by those skilled in the art to which the invention belongs. In case of conflict, this description takes precedence.

It should be noted that the terms "first\second\third" involved in the embodiments of the present invention are merely used to distinguish similar objects and do not represent a specific ordering of the objects. It can be understood that "first\second\third" can be interchanged with a specific order or sequence where permitted. It should be understood that the objects distinguished as "first\second\third" can be interchanged under appropriate circumstances.

As mentioned in the background, due to air circulation, the grease of the food in the frying vat will be brought into the cover body by the circulating air, and most of the grease will adhere to the reflective cover. Due to the obstruction of the heating tube and the fan, it is difficult for the user to clean the reflective cover. After long-term use, grease will adhere to the inner side of the reflective cover of the cover body over a large area.

Based on this, the invention provides a new type of air fryer that can reduce the contamination of the cover body by grease.

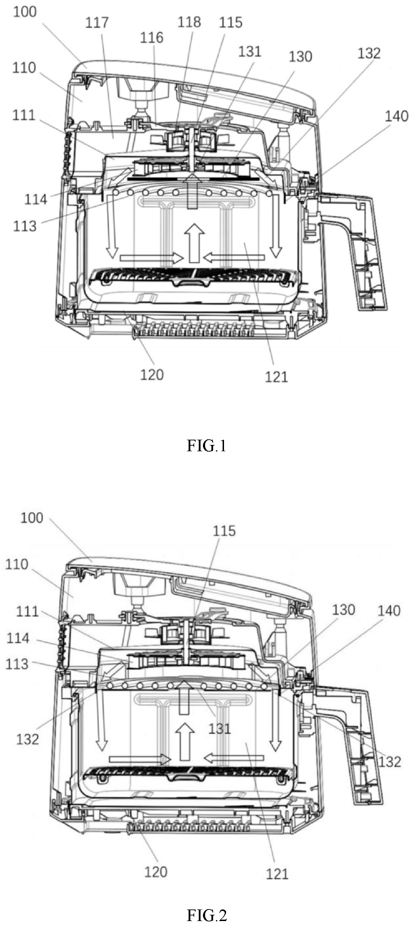

FIG. 1 shows a first embodiment of an air fryer according to the present invention. As shown in FIG. 1, the air fryer 100 according to the present invention includes a cover body 110 and a frying vat 120. The cover body 110 has a reflective cover 111 for accommodating a heat generating device. The frying vat 120 has a cooking chamber 121 for placing food. Here, the cover body 110 is configured to cover the frying vat 120. The cover body 110 may be integrally formed with the frying vat 120 as shown in FIG. 1 , or the cover body 110 and the frying vat 120 may be detachably connected from each other.

In the present invention, the reflective cover 111 is used to reflect the heat generated by the heating element 113 toward the cooking chamber 121 to collect heat. The reflective cover 111 may be made of metal, for example.

The heat generating device includes a heat generating element 113 for generating heat and a fan 114 disposed above the heat generating element 113 for generating airflow.

The heat generating element 113 may be configured as a heat generating tube, for example. The fan 114 may have centrifugal blades, for example, for blowing air around and sucking air in the middle, so that the hot air circulates in the air fryer.

In accordance with the present disclosure, the heat generating device also includes a heat conductive baffle 130 arranged below the fan 114, and the heat conductive baffle 130 and/or the reflective cover 111 are provided with circulation channels 131, 132, and the circulation channels connect the reflective cover 111 and the cooking chamber 121. At least a part of the airflow generated when the fan 114 is in operation enters and exits the circulation channels, thereby generating air convection between the reflective cover 111 and the cooking chamber 121, as shown by the arrows in FIG. 1. This air convection is used to transfer the heat generated by the heat generating element 113. Here, the food to be cooked in the cooking chamber 121 is heated by the radiant heat generated by the heat generating element 113 and the convective heat brought by air convection.

The heat conductive baffle 130 can prevent most of the grease from entering the cover body 110. The heat conductive baffle 130 serves to separate the reflective cover 111 from the cooking chamber 121, so that as much grease as possible remains in the cooking chamber 121, and the user can clean it quickly and conveniently after each use. Since the heat conductive baffle 130 has high thermal conductivity, the heat generating element 113 can still heat the food in the cooking chamber 121 in the form of radiation and conduction.

In some embodiments, as shown in FIG. 1, a first flow guiding structure 140 may also be provided, and the first flow guiding structure 140 is configured to guide the airflow passing through one of the circulation channels 131, 132 into the cooking chamber 121 along a predetermined direction.

Compared with the original traditional air fryer, the air flow has undergone certain changes due to the addition of the heat conductive baffle 130, especially the air flow path from the reflective cover 111 downward to the cooking chamber 121 has changed. In other words, the airflow can only flow out from the circulation channel of the heat conductive baffle, and the flow area becomes smaller, which changes the air volume distribution in the frying vat and the temperature field. In order to maintain the original uniform distribution of the air volume in the frying vat as much as possible, so as to obtain a better food effect, the first flow guiding structure 140 is provided, especially between the reflective cover and the frying vat.

In the embodiment shown in FIG. 1, the cover body 110 also has a drive element 115, such as a drive motor. The drive element 115 is configured to drive the fan 114 to rotate so as to generate airflow, thereby generating air convection between the reflective cover 111 and the cooking chamber 121 as shown by the arrows in FIG. 1. In the embodiment shown in FIG. 1, the cover body 110 further includes a motor cover 116, and a heat dissipation cavity 117 is formed between the motor cover 116 and the reflective cover 111. In the heat dissipation cavity, another fan 118 is arranged above the fan 114, and the drive element 115, such as a drive motor, is also used to drive the other fan 118 to rotate. Here, the drive element 115 is used to drive the fans 114 and 118 to rotate simultaneously. For example, the drive element 115 is a drive motor, and the fans 114 and 118 are mounted on the same motor shaft as the drive motor.

The motor cover 116 is made of plastic, for example, and is used to prevent the hot air generated in the reflective cover 111 from radiating outward, thereby preventing the temperature of components such as the PCB arranged on the top of the cover body 110 from being too high. The other fan 118 has centrifugal air blades for sucking the cold air from the outside into the motor cover to cool the hot air.

In addition, the cold air outlet of the motor cover 116 and the hot air outlet in the reflective cover 111 can be merged together, so that the temperature of the air emitted to the outside is lower, avoiding scalding the user.

FIG. 2 shows a second embodiment of an air fryer according to the present invention. Different from the first embodiment shown in FIG. 1, in the second embodiment shown in FIG. 2, the heat conductive baffle 130 is disposed below the heat generating element 113. This further prevents the grease in the cooking chamber 121 from adhering to the heat generating element 113, thereby enabling the heat generating element 113 to be cleaned better. For other features of the air fryer according to the second embodiment, reference may be made to the first embodiment and will not be repeated here.

In some embodiments, as shown in FIGS. 1 to 3, a first circulation channel 131 is provided in the middle of the heat conductive baffle 130, and a second circulation channel 132 is provided between the heat conductive baffle 130 and the reflective cover 111, so that at least a portion of the airflow generated by the operation of the fan 114 flows from the reflective cover 111 into the cooking chamber 121 through the second circulation channel 132 and flows back from the cooking chamber 121 to the reflective cover 111 through the first circulation channel 131, so as to form air convection. By designing an air circulation channel in the middle of the heat conductive baffle and also designing air circulation channels around the heat conductive baffle and the reflective cover 1, it is possible to achieve unimpeded air circulation and maintain smooth air convection.

Here, the first flow guiding structure 140 may be configured to guide the airflow passing through the second circulation channel 132 into the cooking chamber along a predetermined direction.

Of course, the present invention is not limited to the above-mentioned arrangement of the first circulation channel 131 and the second circulation channel 132. Another circulation channel may also be arranged between the first circulation channel 131 and the second circulation channel 132 to increase air circulation and improve heating efficiency. This invention does not limit this.

In some embodiments, the heat conductive baffle 130 is preferably made of an easy-to-clean material, for example, the heat conductive baffle 130 is constructed as a glass plate or a metal plate. In some embodiments, the first flow guiding structure 140 has an inclined flow guiding plate 141, which is configured to guide the airflow passing through one of the circulation channels 132 toward the middle of the cooking chamber 121 or around the cooking chamber 121. Here, according to the specific needs of the air fryer, the hot air can be guided to the middle portion or peripheral region of the cooking chamber 121 by the flow guiding plate 141 to obtain a variety of temperature fields and air volume distribution fields, thereby meeting the needs of different types of air fryers.

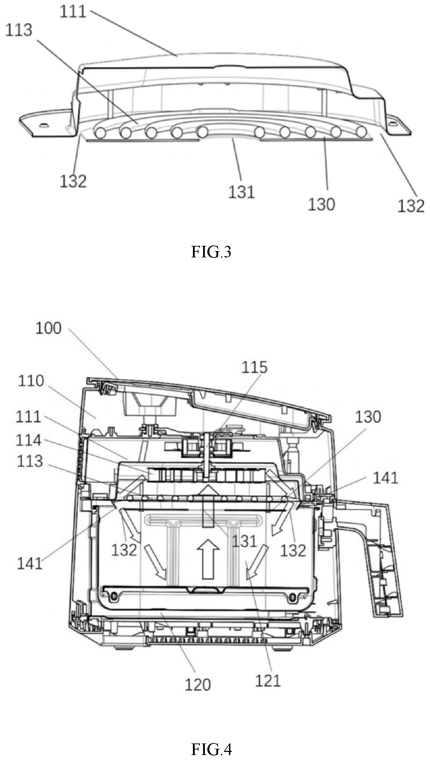

In some embodiments, different from the second embodiment shown in FIG. 2, in the third embodiment shown in FIG. 4, the first flow guiding structure 140 has an inclined flow guiding plate 141, and the flow guiding plate 141 is bent or inclined toward the center of the frying vat. The flow guiding plate 141 can make the airflow generated by the fan 114 flow toward the middle of the cooking chamber 121, so that the hot air flowing toward the middle of the cooking chamber 121 has higher thermal energy and can effectively increase the temperature in the middle of the cooking chamber 121. In addition, by guiding the airflow toward the middle of the cooking chamber 121, the difference between the temperature in the middle of the cooking chamber 121 and the temperature of the peripheral region of the cooking chamber 121 is reduced, so that the temperature distribution in the cooking chamber 121 is more uniform, which is conducive to heating food. For other features of the air fryer according to the third embodiment, reference may be made to the first and second embodiments, and no further details will be given here.

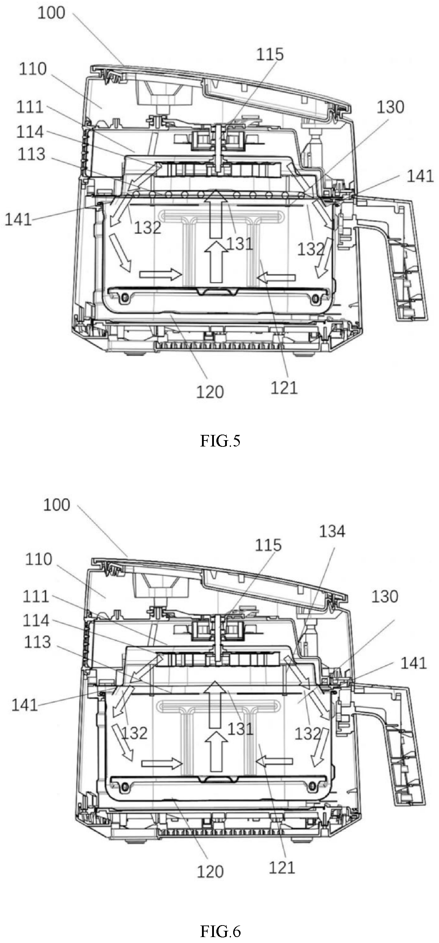

Alternatively, in some other embodiments, different from the second embodiment shown in FIG. 2, in the fourth embodiment shown in FIG. 5, the first flow guiding structure 140 has an inclined flow guiding plate 141, and the flow guiding plate 141 is bent or inclined away from the center of the frying vat. The flow guiding plate 141 can make the airflow generated by the fan 114 cover a wider area, so that the hot air circulation covers a wider area, which can effectively increase the temperature of the peripheral region of the cooking chamber 121. In addition, since the airflow is directed to the peripheral region of the cooking chamber 121 and thus away from the first circulation channel 131, more airflow will enter the bottom space of the cooking chamber 121, so that the back of the food placed in the cooking chamber 121 can also be exposed to more hot airflow, effectively improving the uniformity of food cooking. Regarding other features of the air fryer according to the fourth embodiment, reference may be made to the first to third embodiments and will not be repeated here.

In some embodiments, different from the third embodiment shown in FIG. 5, in the fifth embodiment shown in FIG. 6, the heat conductive baffle 130 and the heating element 113 are constructed as an integral heat generating baffle. In other words, the heat conductive baffle 130 has the heating function of the heat generating element 113, that is, the heat conductive baffle 130 is also a heat generating element. By replacing the traditional heating tube with an integrated heating baffle, the space occupied by the original complex heating tube is released, making the entire cover space more compact. In addition, since the baffle 130 with a heat generating function is used, the intermediate heat transfer medium is reduced, and the radiation heat efficiency can be effectively improved. Regarding other features of the air fryer according to the fifth embodiment, reference may be made to the first to fourth embodiments, and no further details will be given here.

In some embodiments, the heat generating baffle is constructed based on one of thick film heating technology, heat-generating thin film sheet technology, and graphene technology.

In some embodiments, the heat conductive baffle 130 and/or the first flow-guiding structure 140 are fixed on the reflective cover 111, for example, fixedly connected to the reflective cover 111 by bolts. Of course, the connection methods include but are not limited to bolt connection, riveting, welding, etc., which can also achieve the same effect.

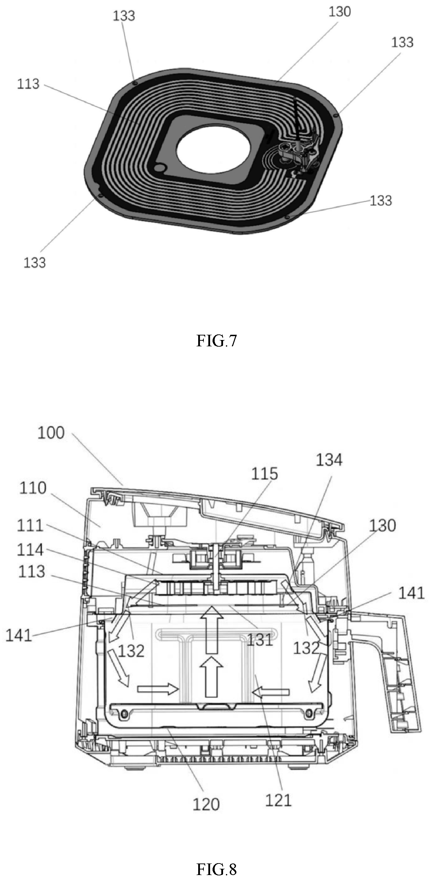

In a specific example, as shown in FIG. 7, the heat generating baffle is constructed based on thick film heating technology, and screw holes 133 are provided around the heat generating baffle for fixed connection with the reflector.

In some embodiments, the heat conductive baffle 130 and/or the first air-guiding structure 140 are configured to be movable relative to the fan 114, and in particular, are disposed on the reflective cover 111 in a manner that they are movable relative to the fan 114. For example, when the heat conductive baffle 130 is connected to the reflective cover 111 by means of the bolts 134, as shown in FIG. 6, the distance of the heat conductive baffle 130 relative to the fan 114, i.e., the height of the heat conductive baffle 130, can be adjusted by adjusting the length of the bolts 134 to adjust the pressure of the space above the heat conductive baffle 130, the flow rate of the air, and the flow direction, so as to obtain the best air circulation most suitable for a specific air fryer. In addition, the change of the height of the heat conductive baffle 130 will also change the noise of the whole machine. The lower the height, the lower the noise when the whole machine is working.

In the sixth embodiment shown in FIG. 8, different from the fifth embodiment shown in FIG. 6, the heat conductive baffle 130 has a higher height and a smaller distance from the fan 114. Regarding other features of the air fryer according to the sixth embodiment, reference may be made to the first to fifth embodiments, and no further details will be given here.

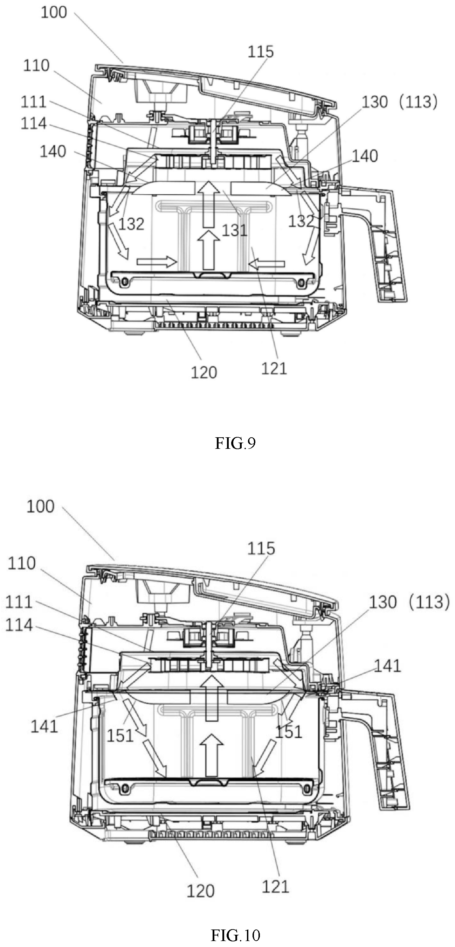

In some embodiments, different from the sixth embodiment shown in FIG. 8, in the seventh embodiment shown in FIG. 9, the first flow guiding structure 140 is disposed on the heat conductive baffle 130, for example, disposed at the edge of the heat conductive baffle 130. By providing the first flow guiding structure on the baffle 130, compared with the flat baffle structure, providing a streamlined first flow guiding structure at the edge of the baffle can reduce the static pressure of the gas. The first flow guiding structure tends to be parallel to the flow direction of the airflow, making the airflow flow smoother, thereby improving the overall airflow circulation effect. Regarding other features of the air fryer according to the seventh embodiment, reference may be made to the first to sixth embodiments, and no further details will be given here.

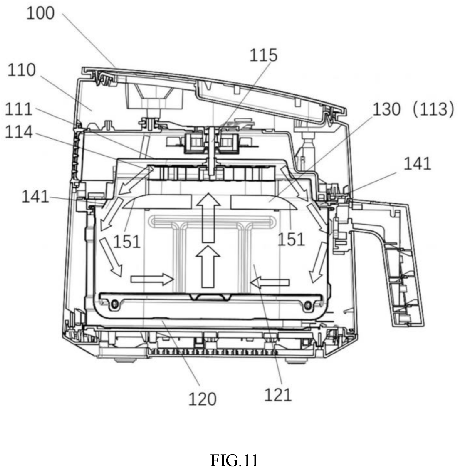

In some other embodiments, as shown in FIGS. 10 and 11, different from the fifth embodiment shown in FIG. 8, the first flow guiding structure is fixed on the reflective cover 111, and a second flow guiding structure independent of the first flow guiding structure is provided on the heat conductive baffle 130, and the second flow guiding structure is configured to cooperate with the first flow guiding structure to guide the airflow passing through one of the circulation channels into the cooking chamber 121 along a predetermined direction. By providing a second flow guiding structure on the baffle 130, compared with a flat baffle structure, providing a streamlined second flow guiding structure at the edge of the baffle can reduce the static pressure of the gas. The second flow guiding structure tends to be parallel to the flow direction of the airflow, further improving the overall airflow circulation effect.

In the eighth embodiment shown in FIG. 10, the first flow guiding structure has an inclined flow guiding plate 141, which is bent or inclined toward the center of the frying vat, and the second flow guiding structure is constructed as an arc portion 151 at the edge of the heat conductive baffle 130, and the tangent of the arc portion 151 is inclined toward the center of the frying vat. The flow guiding plate 141 of the first flow guiding structure cooperates with the arc portion 151 of the second flow guiding structure to make the airflow generated by the fan 114 flow toward the middle of the cooking chamber 121, so that the hot air flowing toward the middle of the cooking chamber 121 has higher thermal energy, which can effectively increase the temperature in the middle of the cooking chamber 121. In addition, by guiding the airflow toward the middle of the cooking chamber 121, the difference between the temperature in the middle of the cooking chamber 121 and the temperature of the peripheral portion of the cooking chamber 121 is reduced, so that the temperature distribution in the cooking chamber 121 is more uniform, which is conducive to heating food. Regarding other features of the air fryer according to the eighth embodiment, reference may be made to the first to seventh embodiments, which will not be described in detail here. Alternatively, in the ninth embodiment shown in FIG. 11, the first flow guiding structure has an inclined flow guiding plate 141, which is bent or inclined away from the center of the frying vat, and the second flow guiding structure is constructed as an arc portion 151 at the edge of the heat conductive baffle 130, and the tangent of the arc portion 151 is inclined away from the center of the frying vat. The flow guiding plate 141 of the first flow guiding structure cooperates with the arc portion 151 of the second flow guiding structure, so that the airflow generated by the fan 114 covers a wider area, so that the hot air circulation covers a wider area, which can effectively increase the temperature of the peripheral region of the cooking chamber 121. In addition, since the airflow is directed to the peripheral region of the cooking chamber 121 and thus away from the first circulation channel 131, more airflow will enter the bottom space of the cooking chamber 121, so that the back of the food placed in the cooking chamber 121 can also be exposed to more hot airflow, effectively improving the uniformity of food cooking. Regarding other features of the air fryer according to the ninth embodiment, reference may be made to the first to eighth embodiments, and no further details will be given here.

The features or feature combinations mentioned above in the specification, drawings and claims may be used in any combination or alone as long as they are meaningful within the scope of the present invention and do not contradict each other.

The above description is only a preferred embodiment of the invention, and does not limit the patent scope of the invention. All equivalent transformations made by using the contents of the invention specification and drawings under the inventive concept of the invention, or direct or indirect application in other related technical fields are included in the patent protection scope of the invention.

## Claims

1. An air fryer, comprising a cover body and a frying vat, wherein the cover body has a reflective cover for accommodating a heating device, the frying vat has a cooking chamber for placing food, the cover body is configured to cover the frying vat, and the heating device comprises a heating element and a fan arranged above the heating element;
**characterized in that** the heating device further comprises a heat conductive baffle arranged below the fan, the heat conductive baffle and/or the reflective cover are provided with circulation channels, the reflective cover and the cooking chamber are connected by the circulation channels, at least a part of the airflow generated when the fan is in operation enters and exits the circulation channels, thereby generating air convection between the reflective cover and the cooking chamber.

2. The air fryer according to claim 1, **characterized in that** the heat conductive baffle is arranged below the heating element.

3. The air fryer according to claim 1, **characterized in that** the heat conductive baffle and the heating element are constructed as an integrated heating baffle.

4. The air fryer according to claim 3, **characterized in that** the heating baffle is made based on one of thick film heating technology, heating film technology and graphene technology.

5. The air fryer according to any one of claims 1 to 4, **characterized in that** a first flow guiding structure is provided, wherein the first flow guiding structure is configured to guide the airflow passing through one of the circulation channels into the cooking chamber along a predetermined direction.

6. The air fryer according to claim 5, **characterized in that** the first flow guiding structure has an inclined flow guiding plate configured to guide the airflow passing through one of the circulation channels toward the middle portion or peripheral portion of the cooking chamber.

7. The air fryer according to any one of claims 1 to 6, **characterized in that** a first circulation channel is provided in the middle of the heat conductive baffle, and a second circulation channel is provided between the heat conductive baffle and the reflective cover, so that at least a part of the airflow generated when the fan is in operation flows from the reflective cover into the cooking chamber through the second circulation channel and flows back from the cooking chamber to the reflective cover through the first circulation channel, thereby forming the air convection.

8. The air fryer according to claim 7, **characterized in that** a first flow guiding structure is provided, and the first flow guiding structure is configured to guide the airflow passing through the second circulation channel into the cooking chamber along a predetermined direction.

9. The air fryer according to any one of claims 1 to 7, **characterized in that** the heat conductive baffle is fixed on the reflective cover.

10. The air fryer according to any one of claims 1 to 7, **characterized in that** the heat conductive baffle is configured to be movable relative to the fan.

11. The air fryer according to claim 10, **characterized in that** the heat conductive baffle is provided on the reflective cover in a manner that the heat conductive baffle is capable of moving relative to the fan.

12. The air fryer according to claim 5, **characterized in that** the first flow guiding structure is fixed on the reflective cover, and/or
the first flow guiding structure is configured to be capable of moving relative to the fan.

13. The air fryer according to claim 5, **characterized in that** the first flow guiding structure is arranged on the heat conductive baffle.

14. The air fryer according to claim 5, **characterized in that** the first flow guiding structure is fixed on the reflective cover, and a second flow guiding structure independent of the first flow guiding structure is arranged on the heat conductive baffle, and the second flow guiding structure is configured to cooperate with the first flow guiding structure to guide the airflow passing through one of the circulation channels into the cooking chamber along the predetermined direction.
